# EUROPEAN PATENT APPLICATION

(11) **EP 1 434 246 A1**
(43) Date of publication of application: **30.06.2004**
(21) Application number: 01274469.4
(22) Date of filing: 15.11.2001
(51) Int. Cl.: H01J 1/30

(54) **FIELD ELECTRON EMITTING DEVICE**

(30) Priority: 04.09.2001 JP 2001267831
(71) Applicant: Japan Science and Technology Agency, Kawaguchi-shi, Saitama 332-0012 (JP); NEC Corporation, Minato-ku, Tokyo 108-8001 (JP)
(72) Inventor: IIJIMA, Sumio, Nagoya-shi, Aichi 468-0011 (JP); YUDASAKA, Masako, Tsukuba-shi, Ibaraki 300-2635 (JP); LASZLO, Forro, CH-1024 Ecublens (CH); SLAVEN, Garaj, CH-1022 chhavannes (CH); J.-M, Bonard, CH-1004 Lausanne (CH)
(74) Representative: Calamita, Roberto
(86) International application number: PCT/JP2001/009985
(87) International publication number: WO 2003/023806

(57) **Abstract**

A novel field electron emitting device characterized in that a main portion of an electron emitting source for emitting electrons by an electric field is made of a carbon nanohorn. The field electron emitting device is high in electron emitting efficiency and excellent in productivity.

## Description

### Technical Field

The present invention relates to a field electron emitting device. More specifically, the present invention relates to a novel field electron emitting device in which a carbon nanohorn is used and which is useful for a flat panel display and the like.

### Background Art

Conventionally, in a flat panel display (FPD) which utilizes field electron emission characteristics, a metal having a relatively small work function, which metal may be of various types, is generally used for an electron emitting source of an electron emitting device.

It is considered that an electron emitting source preferably has a tip end, which is of a sharp conical shape, and has a relatively large aspect ration (length/diameter of cross section) in order to achieve a higher efficiency in emitting electrons at a lower voltage. However, when a metal shaped like a needle is used as an electron emitting source, the sharpness of the tip end thereof, when evaluated as the diameter of a cross section, cannot exceed several hundred nm. That is, there is a limit in enhancing the aspect ratio in the case of an electron emitting source made of metal.

Therefore, in recent years, there have been made a number of attempts in which diamond or a carbon nanotube (CNT) is utilized as an electron emitting source. With regard to diamond, by utilizing a fact that the (111) face in the 1 × 1 structure of diamond exhibits negative electric affinity, a high electric current can be obtained at a low voltage without using the tunnel effect. With regard to CNT, by utilizing a fact that a characteristic shape of a carbon nanotube having diameter of approximately 1 to 10 nm and random length is formed in a self-organizing manner and also utilizing the electric characteristics resulting therefrom, an electron emitting device having a tip end structure in which the tip end is sharp and the aspect ratio thereof is in a range of approximately 100 to 1000 is realized.

Although diamond exhibits better electron emission characteristics, as compared with an electron emitting source in which a metal material is used, the electron emission characteristics of diamond are poorer than the excellent electron emission characteristics of CNT. Thus, CNT is now receiving more attention than diamond.

Regarding CNT, although CNT is a substance having excellent electron emission characteristics as described above, there is a problem in that a method of producing a sufficient amount of CNT has not been established and thus CNT is costly as a material. Further, there is another problem in that it is extremely difficult, in technological terms, to attach and dispose one end of each CNT on a substrate such that the direction in which each CNT extends is aligned substantially orthogonal to the substrate.

The present invention has been achieved in view of the above-described circumstances. One object of the present invention is to solve the problems of the conventional techniques and to provide a novel field electron emitting device in which a carbon nanohorn is used and which is not only high in electron emitting efficiency but also excellent in productivity.

### Disclosure of Invention

In order to achieve the above-described object, the present invention provides an invention having the following aspects.

Specifically, in a first aspect of the present invention, there is provided a field electron emitting device characterized in that a main portion of an electron emitting source for emitting electrons by an electric field is made of a carbon nanohorn.

Further, in a second aspect of the present invention, the carbon nanohorn of the field electron emitting device of the first aspect is constituted of a single-walled graphene sheet. In a third aspect of the present invention, the carbon nanohorn of the field electron emitting device of the first aspect is constituted of a multi-walled graphene sheet. In a fourth aspect of the present Invention, the carbon nanohorn of the field electron emitting device of any of the aforementioned aspects is a carbon nanohorn aggregate in which plural carbon nanohorns are aggregated such that a horn-like tip end of each of the nanohorns is disposed on the radially outer side and the other free end thereof is disposed together as the core.

### Brief Description of Drawings

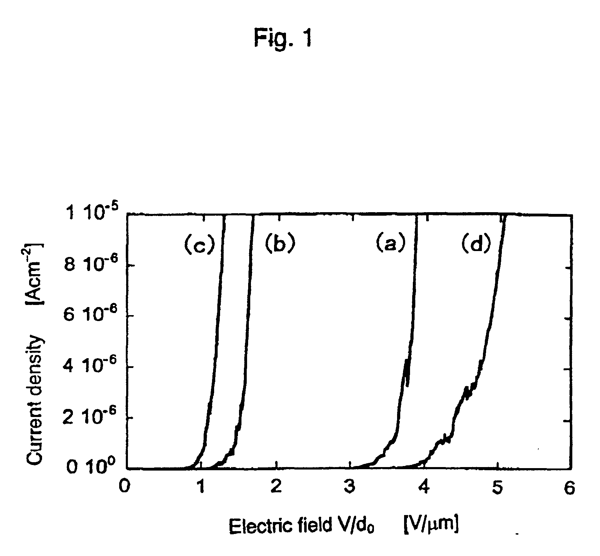

Fig. 1 is a graph exemplarily showing the electron emission characteristics of a thin film produced on a substrate in an example of the present invention, in which graph alphabet (a) represents the electron emission characteristics of SWNH aggregate; alphabet (b) represents those of single-walled carbon nanotube (SWNT); alphabet (c) represents those of closed multi-walled carbon nanotube (dose MWNT); and alphabet (d) represents those of multi-walled carbon nanotube produced by using a metal catalyst in the production process thereof (catal. MWNT).

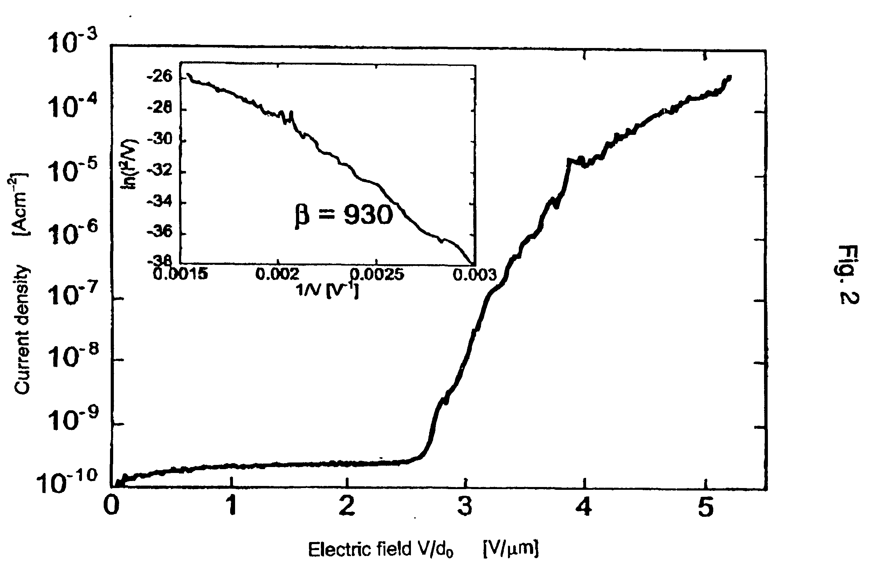

Fig. 2 is a graph showing, in an enlarged manner, the electron emission characteristics of the SWNH aggregate of Fig. 1, with an additional inserted graph in which the scales of the main graph are converted to log(I²/V) and I/V, respectively.

### Best Mode for Carrying Out the Invention

One embodiment of the present invention, having the above-described aspects, will be described hereinafter.

First, the field electron emitting device provided by the present invention is characterized in that a main portion of an electron emitting source for emitting electrons by an electric field is made of a carbon nanohorn.

As the field electron emitting device, those having various types of structure can be considered. Typical examples thereof include a field electron emitting device having a substrate, an electron emitting source, an anode, a voltage applying means and the like. The substrate has a conductive surface. The electron emitting source is disposed on and connected to the surface of the substrate. The anode is disposed at a position at which the anode faces the substrate and the electron emitting source. It is known that this structure, upon application of a voltage between the substrate surface and the anode by the voltage applying means, enables emission of electrons from the electron emitting source. In the present invention, a main portion of the electron emitting source, Le., a portion of the electron emitting source which portion includes the tip end of the electron emitting source, is made of a carbon nanohorn. Alternatively, the entire portion of the electron emitting source, including the main portion, may be made of a carbon nanohorn.

A carbon nanohorn is a novel carbon allotrope constituted of only carbon atoms, which has been discovered by the inventors of the present application. A carbon nanohorn has a structure in which a graphene sheet is cylindrically rounded, as is the structure of a carbon nanotube (CNT). Accordingly, a carbon nanohorn is conductive, as is the case with a CNT.

However, the tube diameter of a carbon nanohorn is not constant as in a CNT, but continuously increases to form a hollow conical shape, i.e., a horn-like shape. One end of a carbon nanohorn is either open or portions thereof are fused with each other, while the other, horn-shaped tip end portion is closed. Accordingly, the tip end of a carbon nanohorn is very sharp, as in a conventionally known common CNT, and achieves a high aspect ratio. That is, when a carbon nanohorn is used at a portion including the tip end of an electron emitting source, a field electron emitting device having an electron emitting source whose tip end is as sharp as that in the case in which a CNT is used can be realized. Further, it has been confirmed by the inventors of the present invention that the threshold voltage at which emission of electrons occurs in a carbon nanohorn is very low, which is as low as that of a CNT and specifically a few V/µm.

Known examples of a carbon nanohorn include a single-walled carbon nanohorn (SWNH) made of a single-layered (single-sheet) graphene sheet and a multi-walled carbon nanohorn (MWNH) made of a multi-layered graphene sheet. In the present invention, the main portion of the electron emitting source may be constituted of either SWNH or MWNH.

SWNH, of the above-described two examples of a carbon nanohorn, is formed as a single-walled structure of which wall thickness corresponds to the dimension of one carbon atom. Typically, SWNH can be obtained as a carbon nanohorn having a horn-like shape, in which the diameter of the open end is approximately 2 to 3 nm, the length is approximately 30 to 50 nm and the tip angle at the conical portion is approximately 20°. That is, SWNH can achieve a structure of an electron emitting source, in which structure the tip end is sharp. Therefore, SWNH is a preferable example of a carbon nanohorn for constituting the field electron emitting device of the present invention. On the other hand, in the case of MWNH, it is assumed that even if the tip end of a carbon nanohorn is broken during electron emission, the inner walls of MWNH can continuously effect electron emission and thus durability of the device is enhanced (i.e., the product life is prolonged). Thus, MWNH is a preferable example of a carbon nanohorn for constituting a field electron emitting device.

Further, with regard to SWNH, it is known that SWNH exists as a carbon nonohorn aggregate (which will be referred to as "SWNH aggregate" hereinafter) in which plural SWNHs are aggregated in a spherical shape, with the horn-shaped, closed ends thereof being disposed on the radially outer side and the other, free ends thereof being partially fused with each other at the core side of the sphere. Such a SWNH aggregate as a secondary aggregate has diameter of approximately 80 to 100 nm, radius of curvature which is no higher than 4 nm and typically 2 to 3 nm at the closed tip end portion having a conical shape projecting at the surface of the SWNH aggregate, and a shape like a flow of dahlia having stem-like petals whose tip end portions are conical.

In the field electron emitting device of the present invention, preferable examples thereof include a structure in which a main portion of the electron emitting source is made of the above-described SWNH aggregate.

In the above-described SWNH aggregate, each of the horn-shaped tip end portions thereof is disposed so as to extend from the core of the aggregate toward the radially outer side. Accordingly, when one SWNH aggregate, having horn-shaped tip end portions which are bent and those which are not bent, is disposed as an electron emitting source on a substrate, at least one SWNH constituting the SWNH aggregate is reliably disposed substantially orthogonal to the substrate, with the horn-shaped tip end portion thereof being disposed upward. In other words, an arrangement in which at least one SWNH is disposed orthogonal to a substrate can reliably be realized without necessity of carrying out an operation of disposing and attaching a SWNH such that the SWNH is disposed orthogonal to the substrate.

Examples of a method of making a main portion or the entire portion of an electron emitting source, by using SWNH or SWNH aggregate as described above as a material, include a very simple and easy method of dispersing SWNH or SWNH aggregate in an appropriate solvent and coating the solution on a substrate, so that SWNH and/or SWNH aggregate are disposed, in a film-like shape, on the substrate. Examples of the solution which can be used for dispersing SWNH or SWNH aggregate include an organic solvent such as methanol, ethanol, acetone, hexane and benzene, and a polymer solution such as a monochlorobenzene solution of polymethyl methacrylate. As the method of disposing SWNH and/or SWNH aggregate in a fllm-like shape, various known methods or means, other than the aforementioned coating method, can be employed. Specific examples of the method of disposing SWNH and/or SWNH aggregate in a film-like shape include the deposition method, the spincoating method, the spraying method and the like. In these methods, by using SWNH aggregates, SWNH can be easily disposed orthogonal to a substrate.

The inventors of the present invention have already proposed a technique for mass-producing the carbon nanohorn and the SWNH aggregate as described above. Therefore, a sufficient amount of the carbon nanohorn and the SWNH aggregate, as a material for an electron emitting source having a carbon structure with sharp-tip end and high-aspect ratio, is readily available in an inexpensive manner. As a result, by the present invention, a field electron emitting device which enables high performance with low cost can be realized.

Hereinafter, the embodiment of the present invention will be described further in detail by the following example.

### Example

A single-walled carbon nanohom aggregate of which average diameter was 80 nm was obtained by irradiation of graphite with CO₂ laser. The single-walled carbon nanohorn aggregate was placed in ethanol and dispersed by irradiation with ultrasonic wave. Thereafter, the dispersed carbon nanohorn aggregate was suction-filtrated by a ceramic filter of which pore diameter was 200 nm. The deposit collected on the filter was dried and a single-walled carbon nanohorn aggregate film was obtained. The thickness of the film was no more than 200 µm and the density thereof was no more than 0.3 g/cm³. An electron emitting experiment was carried out by using the obtained single-walled carbon nanohorn aggregate as a sample (a).

As samples for comparison, films of (b) a single-walled carbon nanotube (SWNT), (c) closed multi-walled carbon nanotube (closed MWNT), (d) multi-walled carbon nanotube produced by using a metal catalyst in the production process thereof (catal. MWNT), were formed by the spraying method, respectively, and each of the films was subjected to an electron emitting experiment in a manner similar to the present example.

In the electron emitting experiment, each of the above-described samples placed on the tip end of a manipulator was introduced into a vacuum chamber. The sample was disposed to face a spherical stainless electrode, with a clearance of 125 µm therebetween, and electron emission current was measured. The pressure of the atmosphere was set at 10⁻⁷ mbar.

The amount of electron emission when a voltage was applied to the thin film on the substrate was measured. The result is shown in Fig. 1. It was confirmed that, in (a) SWNH aggregate, the amount of electron emission rapidly increased in the vicinity of approximately 3.5 eV (filed voltage). This threshold value is 10 to 100 times lower than the threshold value observed in the electron emission of the conventional metal needle, and in the same order as (b) SWNT, (c) MWNT and (d) MWNT. That is, it was confirmed that the (a) SWNH has substantially the same field electron emission characteristics as those of SWNT and MWNT.

Fig. 2 is a graph in which the vertical axis of Fig. 1, i.e., the electron emission characteristics of the SWNH aggregate of Fig. 1 is emphasized by enlarging the axis. Further, another graph has been inserted thereto, in which another graph the electron emission characteristics are shown by a relationship of ln(I²/V) vs. 1/V.

From Fig. 2, it was confirmed that SWNH aggregate exhibits the threshold value at 2.6 V/µm. Further, as the plotted line representing the relationship of ln(I²/V) vs. 1/V in the inserted graph is substantially linear, it was confirmed that the electron emission characteristics of SWNH aggregate is of Fowler-Nodheim type. In the relationship of Fowler-Nodheim, the value of a field amplification factor β, which is a coefficient for converting the applied voltage to the field intensity based on a geometrical factor of the device, was 930, which is relatively large. Accordingly, it was proved that the configuration of SWNH aggregate is effective for improving the electron emission characteristics.

Needless to say, the present invention is not limited to the above-descried example and various modifications of details thereof are acceptable.

### Industrial Applicability

As described above in detail, the present invention provides a novel field electron emission device in which a carbon nanohorn is used and which is high in electron emitting efficiency and excellent in productivity.

## Claims

1. A field electron emitting device **characterized in that** a main portion of an electron emitting source for emitting electrons by an electric field is made of a carbon nanohorn.

2. The field electron emitting device according to claim 1, **characterized in that** the carbon nanohorn is constituted of a single-walled graphene sheet.

3. The field electron emitting device according to claim 1, **characterized in that** the carbon nanohorn is constituted of a multi-walled graphene sheet.

4. The field electron emitting device according to any one of claims 1 to 3, **characterized in that** the carbon nanohorn is a carbon nanohorn aggregate in which plural carbon nanohorns are aggregated such that a horn-like tip end of each of the nanohorns is disposed on the radially outer side and the other free end thereof is disposed together as the core.
